**Europäisches Patentamt**

**European Patent Office**

**Office européen des brevets**

(19)

(11) Veröffentlichungsnummer: **0 207 332**
**B1**

(12) **EUROPÄISCHE PATENTSCHRIFT**

(45) Veröffentlichungstag der Patentschrift: **16.01.91**

(21) Anmeldenummer: **86107912.7**

(22) Anmeldetag: **10.06.86**

(51) Int. Cl.⁵: **G 02 B 23/18,** G 02 B 7/06,
G 02 B 7/12

(54) **Mitteltrieb zur Innenfokussierung für Ferngläser.**

(30) Priorität: **05.07.85 DE 3524152**

(43) Veröffentlichungstag der Anmeldung:
**07.01.87 Patentblatt 87/02**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
**EP-A-0 087 661**
**EP-A-0 152 056**
**DE-A-2 717 573**
**DE-A-3 150 795**
**DE-U-8 404 136**
**FR-A-2 288 326**
**FR-A-2 312 045**
**GB-A- 765 272**
**GB-A-2 051 403**
**US-A-3 484 149**
**US-A-4 080 043**

(73) Patentinhaber: **D. Swarovski & Co.**
**Postfach 15**
**A-6112 Wattens (AT)**

(72) Erfinder: **Riedl, Bernhard**
**Fassergasse 43**
**A-6060 Hall in Tirol (AT)**

(74) Vertreter: **Kador & Partner**
**Corneliusstrasse 15**
**D-8000 München 5 (DE)**

Courier Press, Leamington Spa, England.

**Beschreibung**

Die Erfindung betrifft einen Mitteltrieb zur Innenfokussierung für Ferngläser.

Ferngläser müssen fokussierbar sein, wobei über ein zentrales Fokussierrad Linsen in beiden Teilen des Gerätes gleichsinnig zur Scharfeinstellung des Bildes bewegt werden. Ferner muß bei einem Fernglas eine Dioptrienverstellung gewährleistet sein die durch Verschieben einer Linse in nur einem Teil des Gerätes erfolgt.

Bei einer Innenfokussierung befinden sich die Bewegungsteile für die Fokussierung im Inneren des Gerätes.

Die Innenfokussierung bringt eine Reihe von Vorteilen gegenüber der Außenfokussierung, nämlich eine bessere Abdichtbarkeit bei Verwendung nach außen feststehender Linsen, eine bessere Gestaltungsmöglichkeit und große Robustheit, da keine beweglichen Teile nach außen ragen.

Der Erfindung liegt die Aufgabe zu Grunde, einen Mitteltrieb zur Innenfokussierung für Ferngläser zu schaffen, der sich durch einfache Konstruktion und Zuverlässigkeit auszeichnet.

Der Erfindung liegt die Erkenntnis zu Grunde, daß diese Aufgabe dadurch gelöst werden kann, daß die Fokussierung über eine verschiebbare Brücke erfolgt, die so ausgestaltet ist, daß der Antrieb für den Dioptrienausgleich durch diese Brücke hindurch oder daneben vorbei geführt werden kann.

Gegenstand der Erfindung ist ein Mitteltrieb zur Innenfokussierung für Ferngläser, der dadurch gekennzeichnet ist, daß ein Fokussierrad über eine Gewindespindel mit einer verschiebbaren Brücke in Eingriff steht und die Objektive zwecks Fokussierung über Mitnehmerwellen mit der verschiebbaren Brücke verbunden sind, ein Dioptrieverstellrad über ein Antriebszahnrad, ein Zwischenzahnrad und ein Abtriebszahnrad mit einer der Mitnehmerwellen mit Bewegungsspindel in Eingriff steht, um die Lage eines Objektivs zur Dioptrieneinstellung zu ändern, wobei das Zwischenzahnrad durch die Brücke oder daneben vorbei geführt ist und solche Höhe aufweist, daß das Abtriebszahnrad über den gesamten Hubbereich der Fokussierung mit dem Zwischenzahnrad in Eingriff steht.

Vorzugsweise ist das Fokussierrad objektivseitig und das Dioptrieverstellrad okularseitig angeordnet.

Bei der Knickung des Gelenks des Geräts zur Anpassung des richtigen Augenabstandes darf die Dioptrieneinstellung nicht verändert werden. Erfindungsgemäß wird deshalb die Brücke in einem auf der Mitnehmerwelle sitzenden Knickausgleich in einer Führungsnut frei geführt.

Der erfindungsgemäße Mitteltrieb zeichnet sich durch einfache Konstruktion und hohe Zuverlässigkeit aus.

Die Einstellung auf unendlich (Nullstellung) bei der Montage kann in einfachster Weise durchgeführt werden. Mechanische Abstimmarbeiten entfallen gänzlich, wodurch der Montageaufwand gering ist.

Die Erfindung wird nachstehend an Hand der Zeichnung, die eine beispielshafte Ausführungsform zeigt, näher erläutert.

Es zeigen:

Fig. 1 eine schematische Seitenansicht teilweise im Schnitt und

Fig. 2 eine Draufsicht auf den Mitteltrieb gemäß Fig. 1.

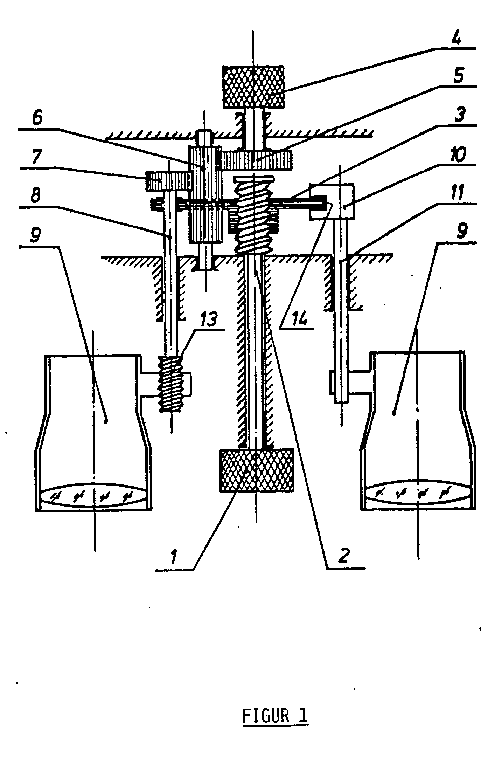

Aus Fig. 1 ist zu ersehen, daß das Fokussierrad 1 objektivseitig angeordnet ist und über eine Gewindespindel 2 mit einer verschiebbaren Brücke 3 in Eingriff steht. Beim Drehen des Fokussierrades 1 bewegt sich die Brücke je nach Drehrichtung vor oder zurück.

Die Brücke steht mit den beiden Mitnehmerwellen 8 und 11 in Verbindung. Diese Mitnehmerwellen sind ihrerseits mit den Objektiven 9 verbunden, die somit mittels dem Fokussierrad 1 zur Scharfstellung des Bildes gleichsinnig bewegt werden können.

Die Dioptrienverstellung erfolgt über das Dioptrieverstellrad 4, das vorzugsweise okularseitig angeordnet ist. Mit dem Dioptrieverstellrad 4 wird über ein Antriebszahnrad 5, ein Zwischenzahnrad 6 und ein Abtriebszahnrad 7 eine Mitnehmerwelle 8 gedreht, die über ein Bewegungsgewinde 13 eines der beiden Objektive 9 verschiebt. Die Dioptrienverstellung erfolgt somit unabhängig von der Fokussierung und wird einem der beiden Objektive als Axialverschiebung aufaddiert.

Die Brücke 3 ist so ausgestaltet, daß das Zwischenzahnrad 6 durch diese hindurch oder daneben vorbei geführt werden kann. Das Zwischenzahnrad 6 weist solche Höhe auf, daß das Abtriebszahnrad 7 über den gesamten Hubbereich der Fokussierung mit dem Zwischenzahnrad 6 in Eingriff steht.

Bei Knickung des Gelenks des Geräts zur Anpassung des richtigen Augenabstandes darf die Dioptrieneinstellung nicht verändert werden. Dies wird dadurch erreicht, daß auf einer der Mitnehmerwellen 11 ein sogenannter Knickausgleich 10 vorgesehen ist, der eine Führungsnut 14 aufweist. Die Brücke 3 wird in dieser Führungsnut 14 frei geführt.

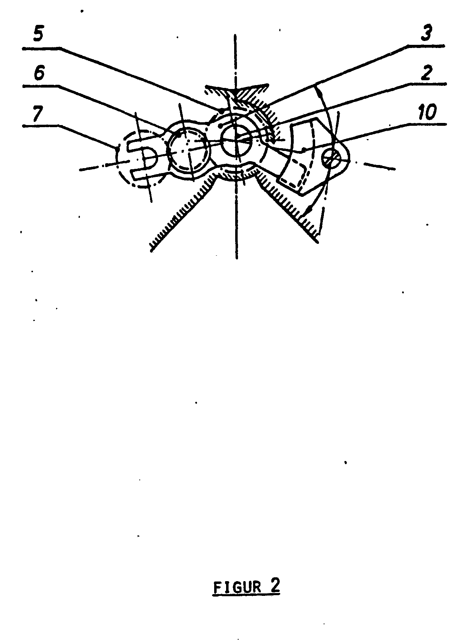

In Fig. 2 ist die Ausgestaltung und Führung der Brücke 3 in der Nut 14 des Knickausgleichs 10 gut zu ersehen. Dieser Teil der Brücke 3 ist so ausgebildet, daß in allen Knickstellungen die Fokussierung gewährleistet ist.

Aus Fig. 2 ist auch gut die Führung des Zwischenzahnrades 6 durch die Brücke 3 zu ersehen.

Der erfindungsgemäße Mitteltrieb eignet sich insbesondere für Ferngläser mit einem geschäumten Gehäuse, wie sie in den deutschen Patentschriften 25 22 738, 26 18 497 und 32 05 583 beschrieben sind. Auf die Offenbarung dieser Patentschriften wird ausdrücklich Bezug genommen.

**Patentansprüche**

1. Fernglas mit Mitteltrieb zur Innenfokussierung, bei dem ein Fokussierrad (1) über eine Gewindespindel (2) mit einer verschiebbaren Brücke (3) in Eingriff steht und die Objektive (9) zwecks Fokussierung über Mitnehmerwellen (8, 11) mit der verschiebbaren Brücke verbunden sind, und ein Dioptrieverstellrad (4) mit einer der Mitnehmerwellen (8) mit Bewegungsgewinde (13) in Eingriff steht, um die Lage eines Objektivs (9) zur Dioptrieneinstellung zu ändern, dadurch gekennzeichnet, daß das Dioptrieverstellrad (4) über ein Antriebszahnrad (5), ein Zwischenzahnrad (6) und ein Abtriebszahnrad (7) mit der Mitnehmerwelle (8) in Eingriff steht, das Zwischenzahnrad (6) durch die Brücke (3) oder seitlich daran vorbei geführt ist und solche Höhe aufweist, daß das Abtriebszahnrad (7) über den gesamten Hubbereich der Fokussierung mit dem Zwischenzahnrad (6) in Eingriff steht.

2. Mitteltrieb zur Innenfokussierung für Ferngläser nach Anspruch 1, dadurch gekennzeichnet, daß die Brücke (3) in einem auf der Mitnehmerwelle (11) sitzenden Knickausgleich (10) in einer Führungsnut (14) frei geführt ist.

3. Mitteltrieb zur Innenfokussierung für Ferngläser nach Anspruch 1 oder 2, dadurch gekennzeichnet, daß das Fokussierrad (1) objektivseitig und das Dioptrieverstellrad (4) okularseitig angeordnet ist.

**Revendications**

1. Jumelles possédant un mécanisme central pour la focalisation interne, dans lequel une molette de mise au point (1) est en prise avec un pont (3) mobile en translation par l'intermédiaire d'une tige filetée (2), les objectifs (9) étant reliés au pont mobile par l'intermédiaire d'axes d'entraînement (8, 11) en vue de la mise au point, et une molette de correction dioptrique (4) est en prise avec l'un des axes d'entraînement (8), pourvu d'un filetage de déplacement (13), afin de changer la position d'un objectif (9) pour la correction dioptrique, caractérisées en ce que la molette de correction dioptrique (4) est en prise avec l'axe d'entraînement (8) par l'intermédiaire d'un pignon d'attaque (5), d'un pignon intermédiaire (6) et d'un pignon mené (7), et en ce que le pignon intermédiaire (6) traverse le pont (3) ou passe à côté de lui et possède une hauteur telle que le pignon mené (7) reste en prise avec le pignon intermédiaire (6) sur toute la plage de mise au point.

2. Mécanisme central de focalisation intérieure pour jumelles, selon la revendication 1, caractérisé en ce que le pont (3) est guidé librement dans une rainure de guidage (14) ménagée dans un dispositif de compensation de fléchissement (10), porté par l'axe d'entraînement (11).

3. Mécanisme central de focalisation intérieure pour jumelles, selon la revendication 1 ou 2, caractérisé en ce que la molette de mise au point (1) est placée du côté des objectifs et la molette de correction dioptrique (4) est placée du côté des oculaires.

**Claims**

1. Binoculars having a central focusing device for internal focusing, wherein a focusing wheel (1) engages a displaceable bridge (3) via a threaded spindle (2) and the objectives (9) are connected to the displaceable bridge via driving shafts (8, 11) for the purpose of focusing, a diopter adjustment wheel (4) engages one of the driving shafts (8) with a screw drive (13) in order to vary the position of an objective (9) for diopter adjustment, characterized in that the diopter adjustment wheel (4) engages the driving shaft (8) via a driving toothed wheel (5), an intermediate toothed wheel (6) and a driven toothed wheel (7), the intermediate toothed wheel (6) is guided through the bridge (3) or laterally past it and is of a height such that the driven toothed wheel (7) engages the intermediate toothed wheel (6) over the entire range of stroke of focusing.

2. The central focusing device for internal focusing in binoculars according to claim 1, characterized in that the bridge (3) is guided freely in a guide groove (14) in a bending compensation means (10) located on the driving shaft (11).

3. The central focusing device for internal focusing in binoculars according to claim 1 or 2, characterized in that the focusing wheel (1) is disposed on the objective side and the diopter adjustment wheel (4) on the eyepiece side.

FIGUR 1

FIGUR 2